# EUROPÄISCHE PATENTSCHRIFT

(11) **EP 3 332 679 B1**
(45) Veröffentlichungstag und Bekanntmachung des Hinweises auf die Patenterteilung: **25.11.2020**
(21) Anmeldenummer: 16202735.3
(22) Anmeldetag: 07.12.2016
(51) Int. Cl.: A47J 31/44

(54) **EINRICHTUNG ZUM ERHITZEN VON MILCH ODER MILCHSCHAUM**
DEVICE FOR HEATING MILK OR MILK FOAM
DISPOSITIF DE CHAUFFAGE DE LAIT OU DE MOUSSE DE LAIT

(43) Veröffentlichungstag der Anmeldung: 13.06.2018
(73) Patentinhaber: Steiner AG Weggis, 6353 Weggis (CH)
(72) Erfinder: STEINER, Adrian, 6353 Weggis (CH)
(74) Vertreter: Luchs, Willi

(56) Entgegenhaltungen:
- EP-A1- 2 798 989
- WO-A1-2015/154211
- CN-Y- 201 223 297
- DE-A1-102006 043 905

## Beschreibung

Die Erfindung betrifft eine Einrichtung zum Erhitzen von Milch oder Milchschaum mit Wasserdampf in einem Dampf/Flüssigkeitsmischer, der mit einer rohrförmigen Mischkammer, mindestens einer Dampfzufuhrleitung sowie einer in Längsrichtung der Mischkammer ausgerichteten Milch/Milchschaum-Zufuhrdüse versehen ist. Die Erfindung betrifft auch einen besonders geeigneten Dampf/Flüssigkeitsmischer für eine derartige Einrichtung.

Einrichtungen dieser Art werden insbesondere in automatisch arbeitenden Kaffeemaschinen zum Zubereiten milch- oder milchschaumhaltiger Getränke eingesetzt. Die Erhitzung der Milch oder des Milchschaums erfolgt dabei bekanntlich durch deren Vermischung mit dem ihnen zugeführten Wasserdampf. Für die Qualität des erzeugten Getränks sind die Eigenschaften der erwärmten Milch oder des erwärmten Milchschaums von erheblicher Bedeutung.

Eine Einrichtung der eingangs genannten Art ist in der DE-OS 38 38 235 geoffenbart. Die dort gezeigte Einrichtung zeichnet sich dadurch aus, dass sie sowohl apparativ als auch konstruktiv einen verhältnismässig einfachen Aufbau aufweist. Sie hat jedoch den Nachteil, dass die Dampfzufuhr in die Mischkammer des Mischers quer zur Längsrichtung der Mischkammer und nur gebündelt in einer oder maximal in zwei gegenseitigen Querrichtungen erfolgt. Infolgedessen ist die Vermischung des Wasserdampfs mit dem entlang der Mischkammer fliessenden Milchstrahl räumlich ungleichmässig und auch strömungstechnisch mangelhaft.

Eine Milchschäumeinrichtung zur Schaumerzeugung aus Milch und heissem Wasserdampf gemäss der Druckschrift DE 10 2006 043 905 ist mit einem feststehenden Gehäuseteil und einem rotierenden Schäumelement versehen. Es ist dabei eine Schäumkammer enthalten, in der die Milch und der Dampf miteinander vermischt werden, bei der das rotierende Schäumelement die Schäumkammer teilweise begrenzt. Der Dampf und die Milch werden durch je eine Leitung parallel zueinander in die Schäumkammer geführt.

Eine Vorrichtung zum automatischen Erzeugen von Milchschaum gemäss der Druckschrift WO 2015/154211 umfasst ein mit einem unteren Auslass versehenes Gehäuse mit einer Kammer, einen Dampfzufuhrkanal, einen Milchzufuhrkanal und einen Lufteinlasskanal. Eine Seitenwand des Gehäuses ist mit einer Einspritzöffnung versehen. Sobald Dampf, Milch und Luft gemischt sind, wird das Gemisch aus der Einspritzöffnung tangential in diese ringförmige Kammer im Gehäuse eingeblasen. Die Milch und die Luft werden dabei radial in diese, hingegen die Luft in Richtung dieser Einspritzöffnung zugeführt.

In der Druckschrift EP-2 798 989 ist eine Getränkezubereitungsvorrichtung mit Mitteln zum Erhitzen von Milch mit Wasserdampf offenbart. Durch eine abgewinkelte Treibdüse wird Dampf zugeführt und dabei Milch durch eine Milchleitung angesaugt. Durch eine zusätzliche Dampfleitung an einer von der Auslassöffnung der Treibdüse unterschiedlichen Position wird der Milch zusätzlich Dampf zugeleitet. Die beiden Dampfleitungen sind nebeneinander und die Milchzufuhrleitung quer zu diesen angeordnet.

Eine Milchschäumvorrichtung einer Kaffeemaschine gemäss der Druckschrift CN-201 223 297 umfasst einen Hohlraumkörper sowie in diesen führende Milcheinlassrohr und Dampfführungsrohr. Ein Luftzuführung ist an der Aussenwand der Dampfrohrverbindung ringförmig angeordnet und führt in den Hohlraumkörper. Beim Einblasen von Dampf durch eine Düse in den Hohlraumkörper wird Milch durch das quere Milcheinlassrohr und Luft durch diese ringförmig angeordnete Luftzuführung angesaugt.

Der Erfindung liegt die Aufgabe zugrunde, diese Nachteile zu vermeiden und eine Einrichtung der eingangs genannten Art zu schaffen, die mit einem einfachen Aufbau eine gleichmässige Erhitzung der Milch bzw. Milchschaums gewährleistet.

Diese Aufgabe wird erfindungsgemäss dadurch gelöst, dass die Dampfzufuhrleitung in eine der rohrförmigen Mischkammer vorgelagerte Dampfzufuhrkammer mündet, die mit der Mischkammer durch um die Milchzufuhrdüse in Längsrichtung der Mischkammer verlaufende Dampfeinlassbohrungen verbunden ist.

Dadurch wird der Wasserdampf gleichmässig in die Milch bzw. den Milchschaum in Richtung des die Mischkammer durchströmenden Milchstrahls eingeführt, sodass beide Medien sich ebenfalls gleichmässig entlang der gesamten Mischkammer innig miteinander vermischen können. Dabei erfolgt die Vermischung turbulenzfrei und strömungstechnisch optimal.

Es ist fertigungstechnisch vorteilhaft, wenn die erfindungsmässigen Dampfeinlassbohrungen parallel zur Mittelachse der rohrförmigen Mischkammer verlaufen. Im Sinne der Erfindung können sie aber auch leicht schräg zur Mittelachse der Mischkammer geneigt sein.

Es ist ebenfalls im Sinne der Erfindung vorteilhaft, wenn der Mischer vorzugsweise vier um die Milchzufuhrdüse gleichmässig verteilte Dampfeinlassbohrungen aufweist.

Aus Sicherheitsgründen können die Dampfeinlassbohrungen mit Rückschlagventilen versehen sein.

Um den Vermischungseffekt in der Mischkammer zu optimieren, sieht die Erfindung auch vor, dass der Dampf/Flüssigkeitsmischer vor und nach dem Mischer mit je einer Drossel versehen ist, wobei die Drossel vor dem Mischer einen kleineren Drosselungsgrad hat als die Drossel nach dem Mischer.

Der erfindungsmässige Dampf/Flüssigkeitsmischer zeichnet sich in einer ersten Variante dadurch aus, dass er einteilig ausgebildet ist, wobei die Dampfzufuhrkammer vorzugsweise in mehrere radiale Einzelkammern unterteilt ist, die mit der rohrförmigen Mischkammer durch je eine eigene Dampfeinlassbohrung verbunden sind. Eine solche Ausbildung ist fertigungs- und montagetechnisch vorteilhaft.

In einer zweiten Variante ist der Dampf/Flüssigkeitsmischer zweiteilig ausgebildet, wobei der Vorderteil die Milch/Milchschaum-Zufuhrdüse aufnimmt, währen der Hinterteil die Dampfzufuhrkammer und die mit dieser über die Dampfeinlassbohrungen verbundene Mischkammer beinhaltet. Diese Variante ist ihrerseits vorteilhaft, wenn die Dampfzufuhr des Mischers auch eine Reinigungsfunktion erfüllen soll. Durch die zweiteilige Ausführung sind dann die Komponenten des Mischers im Reinigungsprozess besser zugänglich.

Es ist aus konstruktiven Gründen zweckmässig, wenn die Dampfzufuhrkammer durch einen ringförmigen Zwischenraum zwischen dem Vorderteil und dem Hinterteil gebildet ist.

Zum besseren Verteilen des Dampfes sieht die Erfindung auch vor, dass der Dampf in den Zwischenraum durch mindestens einen tangential ausgerichteten Dampfeinlasskanal einströmt, durch welchen eine um die Milch/Milchschaum-Zufuhrdüse rotierende Dampfströmung erzeugt wird.

Die Erfindung wird nachfolgend anhand zweier Ausführungsbeispiele unter Bezugnahme auf die Zeichnung näher erläutert. Es zeigen:
- Fig. 1: ein hydraulisches Schema einer erfindungsgemässen Einrichtung;
- Fig. 2: eine erste Variante des Dampf/Flüssigkeitsmischers der Einrichtung nach Fig. 1 im Schnitt und schematisch dargestellt;
- Fig. 3: eine zweite Variante des Dampf/Flüssigkeitsmischers der Einrichtung nach Fig. 1, ebenfalls im Schnitt und schematisch dargestellt;
- Fig. 4: eine perspektivische Ansicht des Dampf/Flüssigkeitsmischer nach Fig. 3, und
- Fig. 5: ein Detail des Dampf/Flüssigkeitsmischers nach Fig. 3 als perspektivischer Schnitt, bei dem der Hinterteil explosiv dargestellt ist.

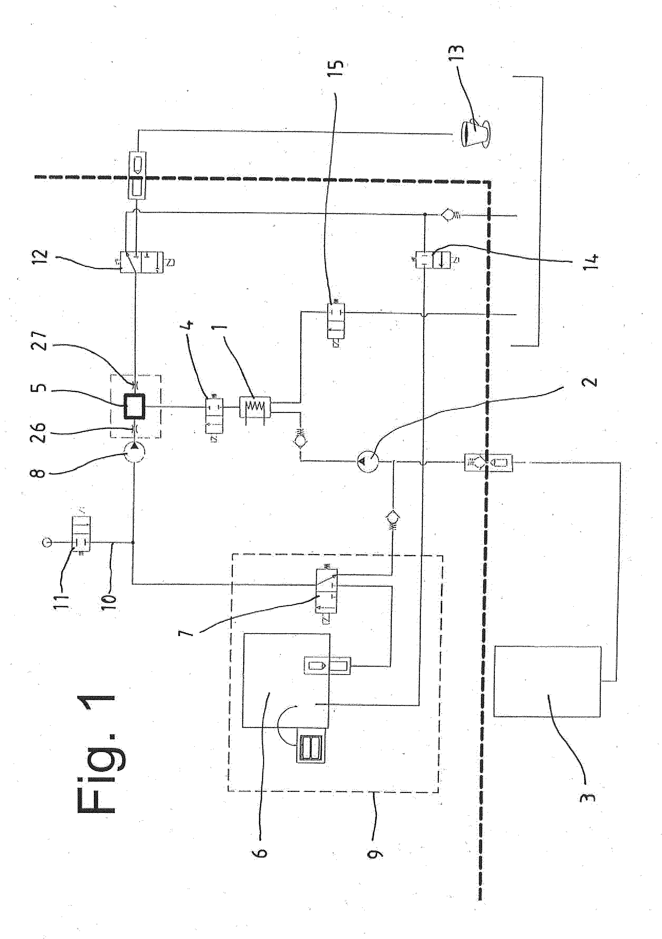

Die Einrichtung gemäss Fig. 1 dient zum Erhitzen von Milch oder Milchschaum mit Wasserdampf. Sie weist einen Dampfkessel 1 auf, der von einer Wasserpumpe 2 aus einem Wasserbehälter 3 gespeist wird und über ein Dampfsteuerventil 4 mit einem Dampf/Flüssigkeitsmischer 5 verbindbar ist, in dem heisser Wasserdampf mit einer Temperatur von ca. 130° bis 140° mit kalter Milch oder Milchschaum vermischt wird.

Die Einrichtung umfasst auch einen Milchbehälter 6 für Kaltmilch zum Zubereiten der milch- oder milchschaumhaltigen Getränke. Der Milchbehälter 6 ist mit dem Dampf/Flüssigkeitsmischer 5 über ein Milchsteuerventil 7 und eine Milchpumpe 8 verbindbar. Er und das Milchsteuerventil 7 sind in einem Kühlraum 9 der Einrichtung untergebracht. Zum Zubereiten von Milchschaum ist der Milchpumpe 8 eine Luftzufuhrleitung 10 mit einem Luftsteuerventil 11 vorgeschaltet. Die im Dampf/Flüssigkeitsmischer 5 erhitzte Milch oder Milchschaum kann über ein Ausgangsventil 12 in einem Trinkgefäss 13 oder dergleichen entnommen werden.

Die erläuterte Einrichtung weist ferner ein Reinigungsventil 14 und ein Entleerungsventil 15 auf, als Bestandteile eines konventionellen Reinigungskreislaufs für die im Betrieb aktiven Elemente der Einrichtung. Ein solches Reinigungssystem ist an sich bekannt und betrifft nicht den Gegenstand der vorliegenden Erfindung.

Die in Fig. 1 von fetten Strichlinien umgrenzten Komponenten der Einrichtung bilden zusammen ein selbständiges Modul, das als solches in eine Kaffeemaschine einbaubar ist.

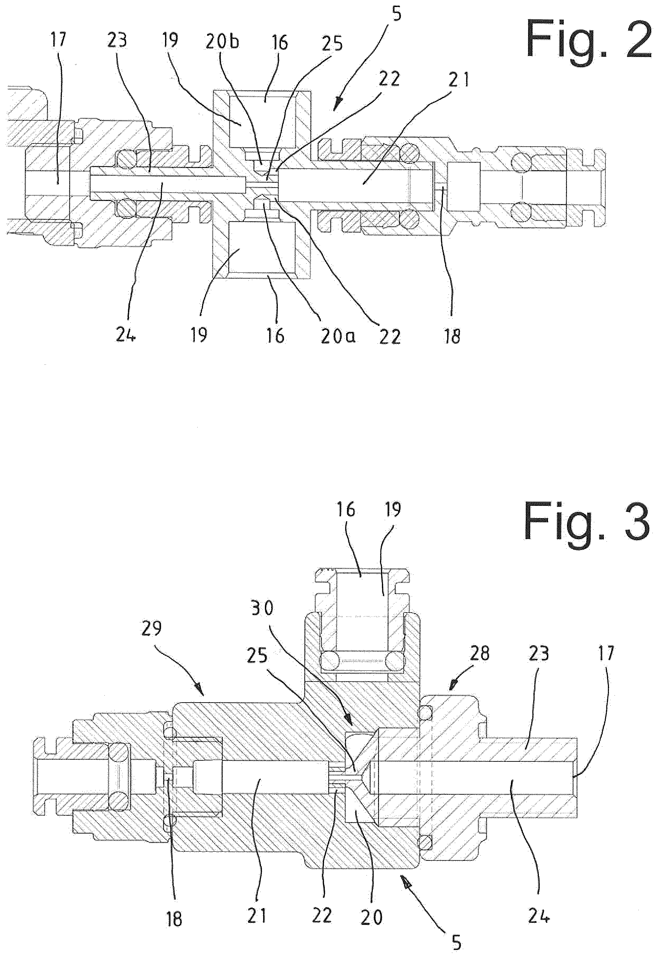

Eine erste Ausführungsform des Dampf/Flussigkeitsmischers 5 aus Fig. 1 ist in Fig. 2 veranschaulicht. Dieser Mischer ist mit Dampfzufuhrleitungen 16, einem Kaltmilch/Kaltmilchschaum-Einlass 17 und einem Warmmilch/Warmmilchschaum-Auslass 18 versehen, aus dem die erhitzte Milch oder der erhitzte Milchschaum herausströmt.

Der Dampf/Flüssigkeitsmischer 5 nach Fig. 2 zeichnet sich dadurch aus, dass er einteilig aufgebaut ist, wobei die Dampfzufuhr durch die zwei radialen Dampfzufuhrleitungen 16 erfolgt, die in entsprechend radial ausgerichteten Bohrungen 19 des Mischers 5 anschliessbar sind. Diese werden in einzelnen Dampfzufuhrkammern 20a, 20b fortgesetzt, die ihrerseits mit der rohrförmigen Mischkammer 21 des Mischers durch achsparallel zur Mittelachse der Mischkammer verlaufende Dampfeinlassbohrungen 22 verbunden sind.

Die Zuführung der Kaltmilch bzw. Kaltmilchschaums in die Mischkammer 21 erfolgt ihrerseits durch einen Rohrstutzen 23 mit einem axial gerichteten Kanal 24, der einerseits mit dem Kaltmilch/Kaltmilchschaum-Einlass 17 verbunden ist und andererseits mit einer in die Mischkammer 21 mündende Milch/Milchschaum-Zufuhrdüse 25, die einen Milch/Milchschaumstrahl in axialer Richtung der Mischkammer 21 erzeugt, versehen ist.

Wie aus Fig. 2 ersichtlich ist, sind die Dampfeinlassbohrungen 22 um die Milch/Milchschaum-Zufuhrdüse 25 gleichmässig verteilt und verlaufen in Längsrichtung der Mischkammer 21. Im vorliegenden Ausführungsbeispiel sind sie achsparallel zur Mischkammer 21 angeordnet. Aus strömungstechnischen Gründen können sie aber auch leicht schräg zur Mittelachse der Mischkammer 21 geneigt sein. Der Mischer 5 mit zwei Dampfeinfassbohrungen versehen. Die Anzahl derselben kann aber je nach Dimensionierung der Mischkammer variieren.

Wie aus Fig. 1 ersichtlich ist, sind vor und nach dem Mischer Drosseln 26, 27 vorgesehen, wobei die Drossel 26 vor dem Mischer einen kleineren Drosselungseffekt hat als die Drossel 27. Eine solche Anordnung ist für die innige Vermischung des Dampfs mit der Kaltmilch bzw. dem Kaltmilchschaum in der Mischkammer 21 vorteilhaft.

Der Dampf/Flüssigkeitsmischer nach Fig. 3 bis Fig. 5 unterscheidet sich vom Mischer nach Fig. 2 im Wesentlichen dadurch, dass er zweiteilig aufgebaut ist, wobei der Vorderteil 28 die Kaltmilch/Kaltmilchschaum-Zufuhrdüse 25 aufnimmt, während der Hinterteil 29 die Dampfzufuhrkammer 20 und die mit dieser über die Dampfeinlassbohrungen 22 verbundene Mischkammer 21 beinhaltet. Der Mischer ist mit nur einer Dampfzufuhrleitung 16 und nur einer mit ihr verbundenen Dampfzufuhrkammer 20 ausgestattet. Letztere entsteht durch einen ringförmigen Zwischenraum 30 zwischen dem Vorderteil 28 und dem Hinterteil 29, der die Kaltmilch/Kaltmilchschaum-Zufuhrdüse 25 voll umgibt.

Anders als in der Variante nach Fig. 2 wird hier der Dampf der Dampfzufuhrkammer 20 durch mindestens einen tangential ausgerichteten Dampfeinlasskanal 31 zugeführt, durch welchen eine um die Kaltmilch/Kaltmilchschaum-Zufuhrdüse 25 rotierende Dampfströmung erzeugt wird. Dadurch kann in der Dampfzufuhrkammer 20 eine optimale Dampfverteilung erzielt werden.

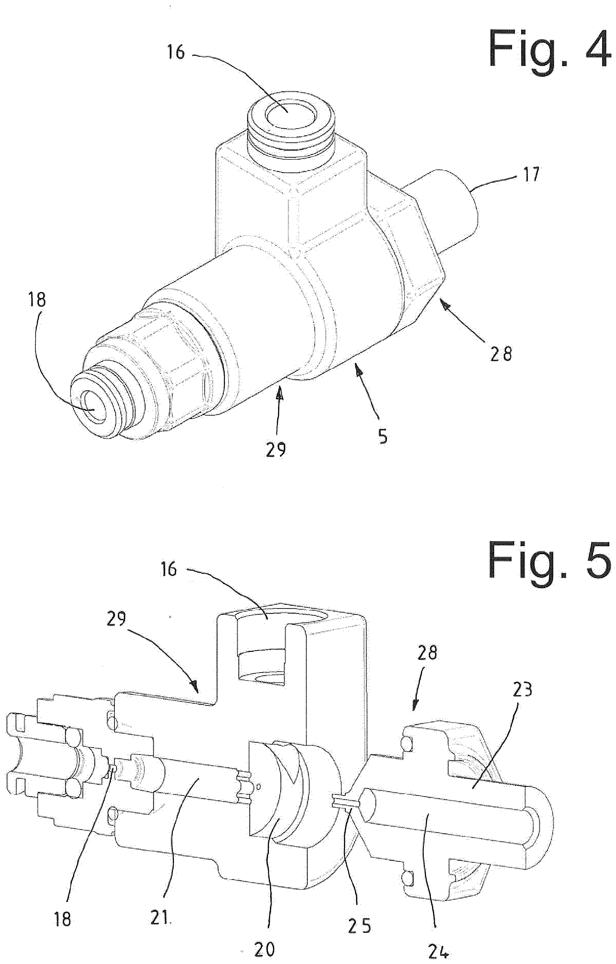

Es sind vier Dampfeinlassbohrungen 22 vorgesehen, von denen in Fig. 5 drei sichtbar sind. Erfindungsgemäss sind sie auch in Längsrichtung der Milchkammer 25 angeordnet und achsparallel zur Mischkammer 21 ausgerichtet. Sie können aber auch leicht schräg zur Mittelachse der Mischkammer geneigt sein. Die Anzahl Bohrungen kann auch hier entsprechend der Dimensionierung des Mischers variieren.

Die erfindungsgemässe Ausrichtung dieser Bohrungen in Längsrichtung der Mischkammer 21 ermöglicht es, dass in der Mischkammer sich die Kaltmilch bzw. der Kaltmischschaum mit dem Wasserdampf innig und gleichmässig auf der gesammelten Länge der Mischkammer vermischen können. Dadurch läuft der Erwärmungsvorgang der Milch optimal ab, und die auf diese Weise erhitzte Milch bzw. Milchschaum erhält somit die für die Zubereitung qualitativ anspruchsvoller Getränke gewünschten Eigenschaften.

Die erfindungsmässige Einrichtung eignet sich auch als autonomes Gerät zum Erwärmen von Milch bzw. zum Erzeugen von Milchschaum sowie anderer vergleichbarer Flüssigkeiten.

Die Dampfeinlassbohrungen könnten im Querschnitt statt rund auch halbrund oder andersförmig ausgebildet sein, um einen strömungstechnisch optimalen Zufluss des Dampfes zu ermöglichen.

Vorzugsweise nach dem Warmmilch/Warmmilchschaum-Auslass 18 könnte ausserdem ein nicht näher gezeigter Temperaturfühler eingebaut sein, durch welchen eine Steuerung der Temperatur der Milch bzw. des Milchschaums darin ermöglicht würde, vorteilhaft indem die Pumpendrehzahl der Wasserpumpe 2 und damit die Dampfmenge pro Zeiteinheit variiert würde, so dass stets Milch/Milchschaum mit der gewünschten bzw. eingestellten Solltemperatur beim Auslass in das Trinkgefäss 13 ausgegeben würde.

## Patentansprüche

1. Einrichtung zum Erhitzen von Milch oder Milchschaum mit Wasserdampf in einem Dampf/Flüssigkeitsmischer (5), der mit einer Mischkammer (21), mindestens einer Dampfzufuhrleitung (16) sowie einer in Längsrichtung der Mischkammer ausgerichteten Milch/Milchschaum-Zufuhrdüse (25) versehen ist, **dadurch gekennzeichnet, dass**
die Dampfzufuhrleitung (16) in eine der Mischkammer (21) vorgelagerten Dampfzufuhrkammer (20 bzw. 20a, 20b) mündet, die mit der Mischkammer durch mehrere in Längsrichtung der Mischkammer um die Milch/Milchschaum-Zufuhrdüse (25) verlaufende Dampfeinlassbohrungen (22) verbunden ist.

2. Einrichtung nach Anspruch 1, **dadurch gekennzeichnet, dass**
die Dampfeinlassbohrungen (22) parallel zur Mittelachse der rohrförmigen Mischkammer (21) angeordnet sind.

3. Einrichtung nach Anspruch 1, **dadurch gekennzeichnet, dass**
die Dampfeinlassbohrungen (22) leicht schräg zur Mittelachse der Mischkammer (21) angeordnet sind.

4. Einrichtung nach einem der Ansprüche 1 bis 3, **dadurch gekennzeichnet, dass**
der Mischer (5) vorzugsweise vier um die Milchzufuhrdüse (25) gleichmässig verteilte Dampfeinlassbohrungen (22) aufweist.

5. Einrichtung nach einem der Ansprüche 1 bis 4, **dadurch gekennzeichnet, dass**
die Dampfeinlassbohrungen (22) mit Rückschlagventilen versehen sind.

6. Einrichtung nach einem der Ansprüche 1 bis 5, **dadurch gekennzeichnet, dass**
sie vor und nach dem Mischer (5) mit je einer Drossel (26, 27) versehen ist, wobei der Drosselungsgrad der Drossel (26) vor dem Mischer kleiner ist als der von der Drossel (27).

7. Dampf/Flüssigkeitsmischer für eine Einrichtung nach einem der Ansprüche 1 bis 6, **dadurch gekennzeichnet, dass**
er einteilig ausgebildet ist, wobei die Dampfzufuhrkammer (20) in mehrere radiale Einzelkammern (20a, 20b) unterteilt ist, die durch je eine eigene Dampfeinlassbohrung (22) mit der Mischkammer (21) verbunden sind.

8. Dampf/Flüssigkeitsmischer für eine Einrichtung nach einem der Ansprüche 1 bis 6, **dadurch gekennzeichnet, dass**
er zweiteilig ausgebildet ist, wobei der Vorderteil (28) die Milch/Milchschaum-Zufuhrdüse (25) aufnimmt, während der Hinterteil (29) die Dampfzufuhrkammer (20) und die mit dieser über die Dampfeinlassbohrungen (22) verbundene Mischkammer (21) beinhaltet.

9. Dampf/Flüssigkeitsmischer nach Anspruch 8, **dadurch gekennzeichnet, dass**
die Dampfzufuhrkammer (20) durch einen ringförmigen Zwischenraum (30) zwischen dem Vorderteil (28) und dem Hinterteil (29) gebildet ist.

10. Dampf/Flüssigkeitsmischer nach Anspruch 9, **dadurch gekennzeichnet, dass**
der Dampf in den Zwischenraum (30) durch mindestens einen tangential ausgerichteten Dampfeinlasskanal (31) einströmt, durch welchen eine um die Milch/Milchschaum-Zufuhrdüse (25) rotierende Dampfströmung erzeugt wird.

## Claims

1. A device for heating milk or milk froth with steam in a steam/liquid mixer (5), which is provided with a mixing chamber (21), at least one steam supply pipe (16) and a milk/milk froth supply nozzle (25) aligned in the longitudinal direction of the mixing chamber, **characterised in that**
the steam supply pipe (16) discharges into a steam supply chamber (20 or 20a, 20b) upstream of the mixing chamber (21), which steam supply chamber is connected to the mixing chamber by preferably a number of steam inlet holes (22) running around the milk/milk froth supply nozzle (25) in the longitudinal direction of the mixing chamber.

2. The device according to Claim 1, **characterised in that**
the steam inlet holes (22) are arranged parallel to the centre axis of the tubular mixing chamber (21).

3. The device according to Claim 1, **characterised in that**
the steam inlet holes (22) are arranged at a slight angle to the centre axis of the mixing chamber (21).

4. The device according to any of Claims 1 to 3, **characterised in that** the mixer (5) preferably has four steam inlet holes (22) distributed evenly around the milk supply nozzle (25).

5. The device according to any of Claims 1 to 4, **characterised in that** the steam inlet holes (22) are provided with check valves.

6. The device according to any of Claims 1 to 5, **characterised in that** it is provided with a respective throttle (26, 27) before and after the mixer (5), whereby the degree of throttling of the throttle (26) before the mixer being smaller than that of the throttle (27).

7. A steam/liquid mixer for a device according to any of Claims 1 to 6, **characterised in that**
It is made in one piece, whereby the steam supply chamber (20) being divided into a number of radial individual chambers (20a, 20b), which are each connected to the mixing chamber (21) by their own steam inlet hole (22).

8. A steam/liquid mixer for a device according to any of Claims 1 to 6, **characterised in that**
it is made in two parts, whereby the front part (28) receiving the milk/milk froth supply nozzle (25), while the rear part (29) contains the steam supply chamber (20) and the mixing chamber (21) is connected to the latter by means of the steam inlet holes (22).

9. The steam/liquid mixer according to Claim 8, **characterised in that** the steam supply chamber (20) is formed by an annular space (30) between the front part (28) and the rear part (29).

10. The steam/liquid mixer according to Claim 9, **characterised in that** the steam flows into the space (30) through at least one tangentially aligned steam inlet channel (31) by means of which a flow of steam rotating around the milk/milk froth supply nozzle (25) is generated.

## Revendications

1. Dispositif de chauffage du lait ou de la mousse de lait par de la vapeur d'eau dans un mélangeur (5) vapeur/liquide, qui est pourvu d'une chambre (21) de mélange, d'au moins un conduit (16) d'apport de vapeur, ainsi que d'une buse (25) d'apport de lait/mousse de lait dirigée suivant la direction longitudinale de la chambre de mélange, **caractérisé en ce que** le conduit (16) d'apport de vapeur débouche dans une chambre (20 et 20a, 20b) d'apport de vapeur, qui est placée devant la chambre (21) de mélange et qui communique avec la chambre de mélange par plusieurs trous (22) d'entrée de vapeur s'étendant autour de la buse (25) d'apport de lait/mousse de lait dans la direction longitudinale de la chambre de mélange.

2. Dispositif suivant la revendication 1, **caractérisé en ce que**
les trous (22) d'entrée de vapeur sont disposés parallèlement à l'axe médian de la chambre (21) de mélange tubulaire.

3. Dispositif suivant la revendication 1, **caractérisé en ce que**
les trous (22) d'entrée de vapeur sont légèrement inclinés par rapport à l'axe médian de la chambre (21) de mélange.

4. Dispositif suivant l'une des revendications 1 à 3, **caractérisé en ce que**
le mélangeur (5) a, de préférence, quatre trous (22) d'entrée de vapeur répartis uniformément autour de la buse (25) d'apport du lait.

5. Dispositif suivant l'une des revendications 1 à 4, **caractérisé en ce que**
les trous (22) d'entrée de vapeur sont pourvus de clapets antiretour.

6. Dispositif suivant l'une des revendications 1 à 5, **caractérisé en ce qu'**
il est pourvu, avant et après le mélangeur (5), de, respectivement, un étranglement (26, 27), le degré d'étranglement de l'étranglement (26) avant le mélangeur étant plus petit que celui de l'étranglement (27).

7. Mélangeur vapeur/liquide pour un dispositif suivant l'une des revendications 1 à 6, **caractérisé en ce qu'**
il est constitué en une seule pièce, la chambre (20) d'apport de vapeur étant subdivisée en plusieurs chambres (20a, 20b) individuelles radiales, qui communiquent avec la chambre (21) de mélange par, respectivement, leur propre trou (22) de vapeur.

8. Mélangeur vapeur/liquide pour un dispositif suivant l'une des revendications 1 à 6,
**caractérisé en ce qu'**
il est constitué en deux parties, la partie (28) avant recevant la buse (25) d'apport de lait/mousse de lait, tandis que la partie (29) arrière comporte la chambre (20) d'apport de vapeur et la chambre (21) de mélange, communiquant avec celle-ci par les trous (22) d'entrée de vapeur.

9. Mélangeur vapeur/liquide suivant la revendication 8, **caractérisé en ce que**
la chambre (20) d'apport de vapeur est formée par un espace (30) intermédiaire annulaire, entre la partie (28) avant et la partie (29) arrière.

10. Mélangeur vapeur/liquide suivant la revendication 9, **caractérisé en ce que**
la vapeur pénètre dans l'espace (30) intermédiaire par au moins un conduit (31) d'entrée de vapeur dirigé tangentiellement, par lequel il est produit un courant de vapeur tournant autour de la buse (25) d'apport de lait/mousse de lait.
